# EUROPÄISCHE PATENTANMELDUNG

(11) **EP 1 321 384 A1**
(43) Veröffentlichungstag der Anmeldung: **25.06.2003**
(21) Anmeldenummer: 01130190.0
(22) Anmeldetag: 19.12.2001
(51) Int. Cl.: B65G 1/08, G07F 7/06

(54) **Durchlauf-Warenlager mit Vereinzelungseinrichtung**

(71) Anmelder: BAUMÜLLER ANLAGEN-SYSTEMTECHNIK GmbH & Co., 90482 Nürnberg (DE)
(72) Erfinder: Eichfelder, Johannes, Dipl.-Ing., 90530 Wendelstein (DE)
(74) Vertreter: Götz, Georg, Dipl.-Ing.

(57) **Zusammenfassung**

Durchlauf-Warenlager für in einzelnen Behältnissen enthaltene Waren, insbesondere Flaschen in Getränkekästen, mit mindestens einem gegenüber der Horizontalen geneigten Schwerkraftförderer mit einem oberen Ende zum Beschicken mit den Behältnissen und einem unteren Ende zur Ausgabe der Behältnisse, wobei am unteren Ausgabe-Ende eine Vereinzelungseinrichtung zum Halten und stückweisen Lösen der unter Schwerkraft gestauten Behältnisse voneinander angeordnet ist, und mit einer bewegbaren Abholeinheit, die zur stückweisen Übernahme je eines über die Vereinzelungseinrichtung freigegebenen Behältnisses vom unteren Ausgabe-Ende des Schwerkraftförderers ausgebildet ist, wobei die Vereinzelungseinrichtung ein Halteelement aufweist, das in Eingriff mit dem Behältnis bringbar und von dem Behältnis mittels der Abholeinheit dadurch lösbar ist, dass die Abholeinheit gegen die Vereinzelungseinrichtung zur Ausübung einer Löse-Verstellkraft bewegbar ist.

## Beschreibung

Die Erfindung betrifft ein Durchlauf-Warenlager für in einzelnen Behältnissen enthaltene Waren, insbesondere für Flaschen in Getränkekästen. Es weist mindestens einen gegenüber der Horizontalen geneigten Schwerkraftförderer auf, dessen oberes Ende zum Beschicken oder Aufgeben der Behältnisse und dessen unteres Ende zur Ausgabe oder Entnahme der Behältnisse dient. Am unteren Ausgabe-Ende ist eine Vereinzelungseinrichtung zum Halten und stückweisen Lösen der Behältnisse voneinander angeordnet oder integriert, die in dem Schwerkraftförderer unter Staudruck stehen. Ferner umfaßt das Warenlager eine dem Schwerkraftförderer zugeordnete, bewegbare Abholeinheit, die zur stückweisen Übernahme je eines über die Vereinzelungseinrichtung freigegebenen Behältnisses am unteren Ausgabe-Ende des Schwerkraftförderers ausgebildet ist.

Aus DE-C-33 01 905 ist ein selbstkassierender Warenautomat, insbesondere Getränkeautomat, mit einem Vollgut- und einem Leergutspeicher bekannt. Letztere sind als Schwerkraftförderer in Form von geneigten Rollenbahnen realisiert. An den Entnahmeenden der Schwerkraft-Rollenförderer für das Vollgut ist ein auf Schienen 6 verfahrbarer Querförderer mit Fördermitteln beispielsweise in Form von angetriebenen Rollen oder einem Förderband angeordnet.

Durchlauf-Warenlager sind aus EP-B-888 983, EP-A-968 938 und DE-A-100 21 318 bekannt. Ihnen gemeinsam sind in Schwerkraft-Rollenbahnen integrierte Durchlaufsperren, wodurch eine Lagereinheit in einer Warteposition arretierbar ist, die der Entnahmeposition am Ende des Schwerkraftförderers vorgelagert ist.

Ein Durchlauf-Lager mit den eingangs genannten Merkmalen ist in DE-U-296 07 940 für den Einsatz in einem Getränkeautomaten oder automatisierten Getränketerminal für Getränkekästen unter Verwendung von Schwerkraft-Rollenbahnen beschrieben. Insbesondere ist angeregt, an ihrem einer Abholeinheit zugewandten Ende eine Vereinzelungseinrichtung einzusetzen, die es ermöglicht, jeweils einen einzelnen Getränkekasten für die Abholeinheit bereitzustellen. Diese ist als vertikal und in einer einzigen horizontalen Achse beweglicher Hublift offenbart. Hinweise zur konkreten Realisierung der Vereinzelungseinrichtung sind nicht angegeben.

Es ergibt sich die der Erfindung zugrundeliegende Aufgabe, ein auf Schwerkraftförderer basierendes Durchlauf-Warenlager zu schaffen, bei dem eine geordnete Entnahme bzw. Übergabe der Waren bzw. Behältnisse an eine heranund wegbewegbare Abholeinheit mit hoher Betriebszuverlässigkeit unter Einsatz einfacher technischer Mittel realisierbar ist. Zur Lösung wird auf das im Patentanspruch 1 angegebene Durchlauf-Warenlager verwiesen. Zweckmäßige, vorteilhafte Ausgestaltungen der Erfindung ergeben sich insbesondere aus den abhängigen Ansprüchen.

Indem die Vereinzelungseinrichtung ein verstellbares Halteelement besitzt, läßt sich ein Waren-Behälter am Ausgang des Schwerkraftförderers gezielt in der Entnahmeposition arretieren und im richtigen Zeitpunkt zur Übergabe auf die Abholeinheit von den nachfolgenden Behältnissen lösen. Indem der Löse-Verstellmechanismus durch die Abholeinheit betätigt wird, ergibt sich eine mit einfachen Mitteln eine zuverlässige Koordination und Synchronisation zwischen dem Vorgang der Entnahme des Behältnisses vom Schwerkraftförderer und dem Erfassen des Behältnisses durch die Abholeinheit. Dabei wird die Verstellbarkeit und Beweglichkeit, die bei der Abholeinheit ohnehin notwendig vorhanden sein muß, zum Anstoßen des Vereinzelns der Behältnisse am Ausgang des Schwerkraftförderers ausgenutzt.

Zur Erhöhung des Bedienkomforts und des Automatisierungsgrades wird die vorteilhafte Erfindungsausbildung vorgeschlagen, die Vereinzelungseinrichtung mit einem Rückstellorgan zu versehen, dessen Funktion darin besteht, das Halteelement nach beendetem Entnahmevorgang selbsttätig bzw. selbstständig in Eingriff mit dem nächsten nachfolgenden Behältnis zu bringen.

Bei Durchlauf-Warenlagern besteht das Gebot einer effizienten Ausnutzung vorhandener Flächen. Daraus resultiert die Anforderung an einer platzsparenden und kompakten Bauweise für die Vereinzelungseinrichtung am unteren Ende des Schwerkraftförderers. Dem wird mit einer Erfindungsausbildung begegnet, wonach die Vereinzelungseinrichtung an einen Rahmen des Schwerkraftförderers um eine Schwenkachse mit mindestens einem ersten Hebelarm verschwenkbar angelenkt ist, der dann mit dem Halteelement zum Eingriff in das zu arretierende Behältnis versehen ist.

Auf der Basis der Erfindung eröffnen sich zur Realisierung des Halteelement-Rückstellmechanismus nach erfolgter Abholung eines Behältnisses mehrere Alternativen. Eine erste besteht darin, von der Schwerkraft Gebrauch zu machen. Das Rückstellorgan wird beispielsweise mit einem zweiten Hebelarm realisiert, dessen Gewicht und daraus resultierendes Drehmoment größer als das des ersten Hebelarmes mit dem Halteelement sowie dem Drehmoment des ersten Hebelarmes entgegengerichtet sind. Indem die beiden Hebelarme zweckmäßig über eine gemeinsame Schwenkachse bzw. Anlenkstelle miteinander starr gekoppelt sind, wird so das Halteelement nach erfolgter Auslenkung durch die heranbewegte Abholeinheit und Übernahme eines Behältnisses durch die Schwerkraft bzw. das resultierende Drehmoment des zweiten Hebelarms automatisch wieder in die Ausgangs- bzw. Grundstellung zurückverstellt.

Eine zweite Alternative für die Realisierung des Rückstellorgans oder auch ein Zusatz besteht im Einsatz eines Federelements, das am Rahmen oder Chassis des Schwerkraftförderers und am ersten Hebelarm angreift. Wird letzterer durch die heranbewegte Abholeinheit ausgelenkt, und zieht sich die Abholeinheit danach wieder zurück, kann das Federelement den ersten Hebelarm mit dem Halteelement wieder zurückverstellen, so dass das Halteelement in Eingriff mit dem nachfolgenden Behältnis gebracht wird, analog wie bei der ersten Alternative, nur dass dort die Rückverstellung mittels Schwerkraft erfolgt.

Vielfach sind bei Behältnissen, insbesondere Getränkekästen, zahlreiche Erhöhungen, Vertiefungen, Kanten, Ausnehmungen usw. vorhanden. Von diesen Umständen wird über eine vorteilhafte Erfindungsausbildung Gebrauch gemacht, wonach das Halteelement als vorspringender Eingriffshaken ausgebildet ist, der vom Grundkörper der Vereinzelungseinrichtung oder gegebenenfalls vom ersten Hebelarm in Richtung zum Behältnis auskragt.

Im Rahmen der Erfindung kann die Betätigung der Vereinzelungseinrichtung mittels der Bewegung der Abholeinheit dadurch erfolgen, dass letztere in Anschlag an die Vereinzelungseinrichtung gebracht wird. Dazu ist es zur Vermeidung von durch Aufprall verursachten Beschädigungen oder Verschleiß zweckmäßig, gemäß einer Erfindungsausbildung ein oder mehrere Anschlagrollen vorzusehen, die an der Vereinzelungseinrichtung und/oder der Abholeinheit angebracht sind und der Anschlagseite der jeweils anderen bzw. gegenüberliegenden Baukomponente zugeordnet sind. Ein mit der Anschlagrolle erzielter Vorteil besteht darin, dass die Aufprallkraft in eine rollende Bewegung durch Abrollen der Anschlagrolle an der gegenüberliegenden Anschlagfläche umgesetzt wird. Zur Erhöhung der Lebensdauer der Anschlagrolle ist es zweckmäßig, wenn die ihr zugeordnete Anschlagfläche auf der Abholeinheit bzw. der Vereinzelungseinrichtung rundlich geformt ist.

Der Vorgang des Abrollens der Anschlagrolle und damit die Zuverlässigkeit und Betriebssicherheit der Behältnis-Übernahme in die Abholeinheit wird ferner durch die Option gefördert, dass die Drehachse der Anschlagrolle gegenüber einer Grundebene der Abholeinheit vertikal versetzt liegt. So ist die Aufprallkraft nicht direkt diametral auf das Zentrum der Anschlagrolle gerichtet.

Die Zuverlässigkeit und Sicherheit der Übernahme von Waren-Behältnissen auf die Abholeinheit erhöht es weiter, wenn letztere gemäß einer Erfindungsausbildung mit Fördermitteln zur Übernahme der Behältnisse vom Schwerkraftförderer und zu dessen Weitergabe beispielsweise an eine Ausgangsschleuse eines automatischen Getränketerminals versehen sind. Als besonders geeignet in der Praxis hat es sich erwiesen, die Fördermittel der Abholeinheit mit einem von Führungs- und Antriebstrommeln getragenen und/oder angetriebenen Förderband zu realisieren. Dieses vermag die Waren-Behältnisse sowohl schonend aufzunehmen als auch zuverlässig weiter zu transportieren.

Weitere Merkmale, Einzelheiten, Vorteile und Wirkungen auf der Basis der Erfindung ergeben sich aus der nachfolgenden Beschreibung bevorzugter Ausführungsbeispiele der Erfindung sowie aus den Zeichnungen. Diese zeigen über jeweils schematische Seitendarstellungen Durchlauf-Lageranordnungen, wobei
- Figuren 1-3: die Grund- und Lösestellungen von Vereinzelungseinrichtung und Abholeinheit eines ersten Ausführungsbeispiels, und
- Figuren 4 und 5: ebenfalls die Grund- und Lösestellungen eines zweiten Ausführungsbeispiels darstellen.

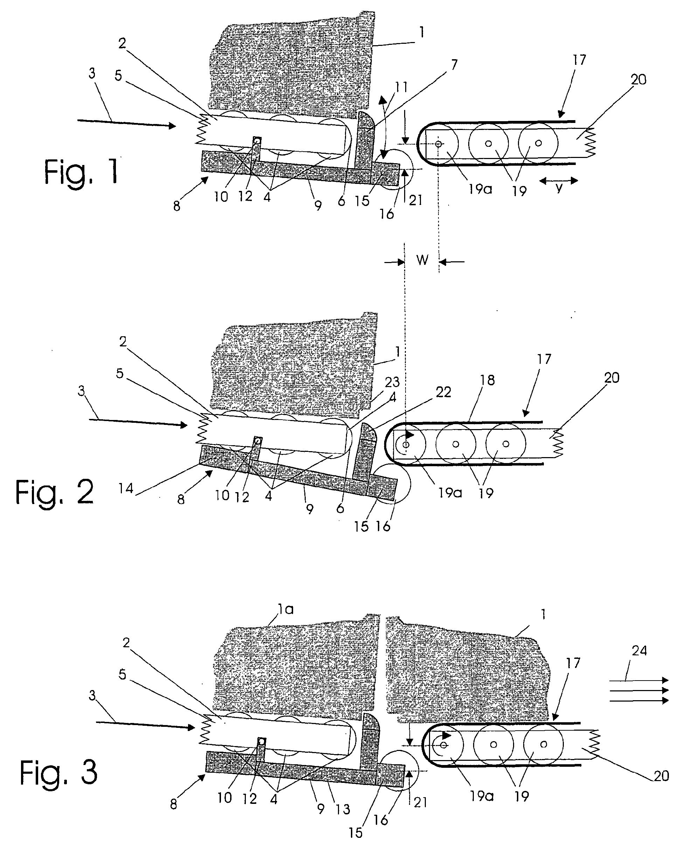

Gemäß Figuren 1-3 werden Behältnisse 1, beispielsweise Getränkekästen für Flaschen, auf gegenüber der Horizontalen geneigten Schwerkraftförderern 2 in Form von passiven Rollenbahnen in Lager-Durchlaufrichtung 3 transportiert. Die Schwerkraftförderer 2 sind mit einer Vielzahl von in Durchlaufrichtung 3 hintereinander angeordneten Transportrollen 4 versehen, die in einem Rahmen bzw. Chassis 5 drehbar gelagert sind, das sich längs der Durchlaufrichtung 3 erstreckt. Die Behältnisse 1 werden von den frei drehbaren Transportrollen 4 getragen und mittels der auf sie wirkenden Schwerkraft bzw. mittels ihres Eigengewichts vom oberen (nicht gezeichneten Beschickungs-Ende) zum unteren Ausgabe-Ende 6 des jeweiligen Schwerkraftförderers 2 bewegt. Am unteren Ende 6 werden die Behältnisse 1 jeweils von einem Halteelement 7 in Form beispielsweise eines Eingriffshakens gestaut bzw. arretiert. Dieser ist Bestandteil einer Vereinzelungseinrichtung 8 mit einem länglichen Grundkörper 9, das in den in Figuren 1 und 3 gezeigten Grundstellungen etwa parallel zum Chassis 5 und zur Durchlaufrichtung 3 verläuft.

Gemäß Figuren 1-3 ist die Vereinzelungseinrichtung 8 am Chassis 5 über eine Gelenkstelle 10 in gegensinnigen Schwenkrichtungen 11 verschwenkbar angelenkt. Die Gelenkstelle 10 bzw. die entsprechend senkrecht zur Zeichenebene verlaufende Schwenkachse ist von einem Gelenkträger 12 umfaßt, welcher vom Grundkörper 9, dort starr befestigt, quer in Richtung zum Chassis 5 vorspringt. Der Gelenkträger 9 bildet an seinem von der Gelenkstelle 10 entfernten Ende eine Abgrenzung bzw. Unterteilung des Grundkörpers 9 in einen ersten, längeren Hebelarm 13 mit dem daran starr befestigten und davon quer in Richtung zum Behältnis 1 vorspringenden Halteelement 7 und einen zweiten, kürzeren Hebelarm 14, welcher trotzdem beispielsweise aufgrund seines weiteren Durchmessers und/oder schwereren Materials als beim ersten Hebelarm 13 ein höheres Gewicht aufweist. In einem in Durchlaufrichtung 3 gesehen hinter dem Halteelement 7 ausgebildeten Fortsatz 15, welcher das Ende des ersten Hebelarms 13 bildet, ist eine Anschlagrolle 16 frei drehbar zum Zusammenwirken mit einer gegenüberliegenden Abholeinheit 17 gelagert. Die Drehachse der Anschlagrolle 16 verläuft etwa parallel zur durch die Gelenkstelle 10 verlaufenden Schwenkachse, und beide Achsen sind etwa quer zu einer in Durchlaufrichtung verlaufenden Vertikalebene ausgerichtet.

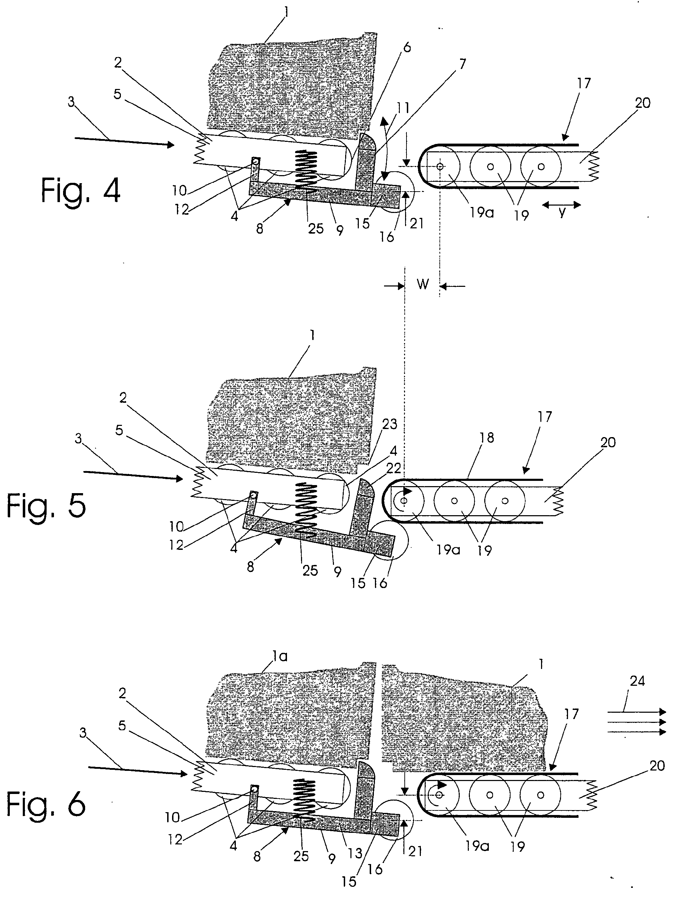

Die Abholeinheit 17 ist mit einem Förderband 18 realisiert, das einzelne Trag-, Antriebs- und/oder Führungstrommeln 19 umfaßt bzw. umläuft. Sie sind an ihren Drehachsen, die etwa parallel zu denen der Transportrollen 4 oder der Anschlagrolle 16 verlaufen, im Trommelchassis 20 frei oder angetrieben drehbar gelagert. Zumindest die dem Schwerkraftförderer 2 nächstliegende Antriebs- oder Führungstrommel 19a ist mit ihrer Drehachse gegenüber der Drehachse der Anschlagrolle 16 vertikal nach oben um den Versatz 21 versetzt angeordnet. Mittels eines (nicht gezeichneten) Linearantriebs läßt sich die Abholeinheit 17 reversierend in hin- und hergehende, horizontale Abholbewegungen (entsprechend einer linearen Y-Bewegungsachse) beispielsweise mit dem Bewegungshub beziehungsweise Verfahrweg W (siehe Fig.4 und 5) versetzen.

Nachfolgend wird zur Funktionsweise der in Figuren 1-3 dargestellten Durchlauf-Lageranordnung folgendes ausgeführt:

Gemäß Figur 1 befinden sich sowohl die Vereinzelungseinrichtung 8 als auch die Abholeinheit 17 in ihren Grundstellungen. Das heißt, der Grundkörper 9 der Vereinzelungseinrichtung ist um ihre Gelenkstelle bzw. Schwenkachse 10 vom zweiten, kürzeren Hebelarm 14 aufgrund dessen höheren Gewichts als das des ersten Hebelarms 13 so nach oben verschwenkt, dass das hakenartige Ende 22 des Halteelements 7 mit dem Behältnis 1 über dessen Außenvertiefung 23 am Bodenrand in Eingriff steht. Dadurch wird das gezeichnete Behältnis 1 in einer Entnahmeposition festgehalten bzw. arretiert, und etwa weitere, nachfolgende Behältnisse werden an dem gezeichneten Behältnis 1 gestaut (nicht gezeichnet). Ferner ist die Abholeinheit 17 entlang der Abhol-Bewegungsrichtungen y in eine Stellung mit Abstand von der Anschlagrolle 16 verfahren.

Gemäß Figur 2 wird der Vorgang des Abholens eines Behältnisses 1 dadurch bewirkt, dass die Abholeinheit 17 entsprechend der Abhol-Bewegungsrichtungen y um den Verfahrweg W (entsprechend Fig. 4 und 5) soweit auf den Schwerkraftförderer 2 zu bewegt wird, bis die vorderste Führungs- bzw. Antriebstrommel 19a mit dem an ihrem Umfang anliegenden Förderband 18 wegen des vorher erläuterten Vertikalversatzes 21 von schräg oben mit exzentrischer Kraftausrichtung auf die Anschlagrolle 16 aufstößt. Dabei wird dem Grundkörper 9 der Vereinzelungseinrichtung 8 mit dem ersten Hebelarm 13 eine Schwenkbewegung 11 nach vertikal unten erteilt. Infolgedessen gerät das Hakenende 22 des Halteelements 7 außer Eingriff mit der bodenseitigen Außenvertiefung 23 des Behältnisses 1. Das Halteelement 7 ist so vom Behältnis 1 wegverstellt, und letzteres kann aufgrund seines Eigengewichts auf den Transportrollen vom Schwerkraftförderer 2 abrollen und auf das Förderband 18 der Abholeinheit 17 gelangen.

Dies ist in Figur 3 veranschaulicht, wonach sich das Behältnis 1 bereits auf dem Förderband 18 der Abholeinheit 17 befindet, welches nun zum Weitertransport des Behältnisses 1 in Transportrichtung 24 weg vom Schwerkraftförderer 2 und einem unmittelbar nachfolgenden Behältnis 1a angetrieben wird. Letzteres wird gemäß Figur 3 in der dort gezeigten Entnahmeposition dadurch gehalten, dass aufgrund eines Drehmoments entgegen dem Uhrzeigersinn der erste Hebelarm 13 mit dem Halteelement 7 nach oben verschwenkt wird, wobei das Hakenende 22 in die Außenvertiefung 23 des Folge-Behältnisses 1a eingreift. Dieses ist dann daran gehindert, vom Ausgabe-Ende 6 des Schwerkraftförderers 2 abzurollen. Das nach oben gerichtete Drehmoment entgegen dem Uhrzeigersinn kommt dadurch zustande, dass einerseits die Abholeinheit 17 von der Anschlagrolle 16 um den Verfahrweg W weggefahren ist und von dieser einen Abstand aufweist, und andererseits das Gewicht bzw. die Schwerkraft des zweiten Hebelarms 14 die des ersten Hebelarms 13 übertrifft. Die in Figur 3 gezeigte Stellung der Vereinzelungseinrichtung 8 entspricht wieder der in Figur 1 gezeigten Grundstellung.

Die Ausführungen zu Figuren 1-3 gelten für das weitere Ausführungsbeispiel nach Figuren 4 und 5 entsprechend mit der Maßgabe, dass anstelle des zweiten Gewichts-Hebelarms 14 eine Rückholfeder 25 als Rückstellorgan für den ersten Hebelarm 13 angeordnet ist. Die Feder 25 ist einerseits am Chassis 5 und andererseits am Hebelarm 13 derart befestigt, dass dieser bei entfernter Abholeinheit 17 mit seinem Einhakende 22 in die Vertiefung 23 aufgrund der Kraft der Rückholfeder 25 verschwenkt wird. Stößt die Abholeinheit 17 gemäß Figur 5 an die Anschlagrolle 16 an, wobei diese entgegen dem Uhrzeigersinn gedreht wird, wird die Rückholfeder 25 ausgelenkt und der Hebelarm 13 mit dem Hakenende 22 nach unten verschwenkt. Gleichzeitig wird die Antriebstrommel 19a im Uhrzeigersinn angetrieben, so dass das Behältnis 1 vom Förderband 18 übernommen und dem Weitertransport 24 unterworfen werden kann.

### Bezugszeichenliste

- 1: Behältnisse
- 2: Schwerkraftförderer
- 3: Durchlaufrichtung
- 4: Transportrolle
- 5: Chassis
- 6: Ausgabe-Ende
- 7: Halteelement
- 8: Vereinzelungseinrichtung
- 9: Grundkörper
- 10: Gelenkstelle
- 11: Schwenkbewegung
- 12: Gelenkträger
- 13: erster Hebelarm
- 14: zweiter Hebelarm
- 15: Fortsatz
- 16: Anschlagrolle
- 17: Abholeinheit
- 18: Förderband
- 19, 19a: Trommel
- 20: Trommelchassis
- 21: Vertikalversatz
- y: Hohlbewegungen
- 22: Hakenende
- 23: Außenvertiefung
- 24: Weitertransport
- 1 a: nachfolgendes Behältnis
- 25: Rückholfeder
- W: Verfahrweg

## Patentansprüche

1. Durchlauf-Warenlager für in einzelnen Behältnissen (1) enthaltene Waren, insbesondere Flaschen in Getränkekästen, mit mindestens einem gegenüber der Horizontalen geneigten Schwerkraftförderer (2) mit einem oberen Ende zum Beschicken mit den Behältnissen (1) und einem unteren Ende (6) zur Ausgabe der Behältnisse (1), wobei am unteren Ausgabe-Ende (6) eine Vereinzelungseinrichtung (8) zum Halten und stückweisen Lösen der unter Schwerkraft gestauten Behältnisse (1) voneinander angeordnet ist, und mit einer bewegbaren Abholeinheit (17), die zur stückweisen Übernahme je eines über die Vereinzelungseinrichtung (8) freigegebenen Behältnisses (1) vom unteren Ausgabe-Ende (6) des Schwerkraftförderers (2) ausgebildet ist, **dadurch gekennzeichnet, dass** die Vereinzelungseinrichtung (8) ein Halteelement (7) aufweist, das in Eingriff mit dem Behältnis (1) bringbar und von dem Behältnis (1) mittels der Abholeinheit (17) dadurch lösbar ist, dass die Abholeinheit (17) gegen die Vereinzelungseinrichtung (8) zur Ausübung einer Löse-Verstellkraft bewegbar (W) ist.

2. Warenlager nach Anspruch 1, **dadurch gekennzeichnet, dass** die Vereinzelungseinrichtung (8) ein Rückstellorgan (10,13,14; 10,13,25) aufweist, wodurch das Halteelement (7) selbsttätig in Eingriff mit dem Behältnis (1) bringbar ist.

3. Warenlager nach Anspruch 1 oder 2, **dadurch gekennzeichnet, dass** die Vereinzelungseinrichtung (8) an ein Chassis (5) des Schwerkraftförderers (2) um eine Schwenkachse (10) mit mindestens einem ersten Hebelarm (13) verschwenkbar (11) angelenkt ist, wobei der erste Hebelarm (13) das Halteelement (7) aufweist.

4. Warenlager nach Anspruch 3, **dadurch gekennzeichnet, dass** die Schwenkachse (10) durch den Anlenkpunkt (10) quer zur Förderrichtung (3) des Schwerkraftförderers (2) verläuft.

5. Warenlager nach Ansprüche 2 und 3 oder 2 und 4, **dadurch gekennzeichnet, dass** das Rückstellorgan (10,13,14) automatisch mittels Schwerkraft betätigbar ist, indem es mit einem zweiten Hebelarm (14) mit einem Gewicht höher als das des ersten Hebelarms (13) mit dem Halteelement (7) ausgebildet ist, und der zweite Hebelarm (14) mit dem ersten starr verbunden und in einem solchen Winkel zum ersten angeordnet ist, dass die Gewichts-Momente beider Hebelarme (13,14) zueinder gegensinnig gerichtet sind.

6. Warenlager nach Ansprüche 2 und 3 oder 2 und 4, **dadurch gekennzeichnet, dass** das Rückstellorgan (10,13,25) mit einem Federelement (25) realisiert ist, das am Chassis (5) des Schwerkraftförderers (2) und am ersten Hebelarm (13) angreift.

7. Warenlager nach einem der vorangehenden Ansprüche, **dadurch gekennzeichnet, dass** das Halteelement (7) als Eingriffshaken (22) ausgebildet ist, der von einem Grundkörper (9) der Vereinzelungseinrichtung (8) oder gegebenenfalls von deren erstem Hebelarm (13) in Richtung zum Behältnis (1) vorspringt.

8. Warenlager nach einem der vorangehenden Ansprüche, **dadurch gekennzeichnet, dass** die Abholeinheit (17) zur Ausübung der Löse-Verstellkraft in Anschlag an die Vereinzelungseinrichtung (8) bringbar ist.

9. Warenlager nach Anspruch 8, **gekennzeichnet durch** eine oder mehrere Anschlagrollen (16), die an der Vereinzelungseinrichtung (8) und/oder der Abholeinheit (17) auf einer der Abholeinheit (17) beziehungsweise Vereinzelungseinrichtung (8) jeweils zugewandten Seite und/oder in Reichweite der Abholeinheit beziehungsweise Vereinzelungseinrichtung zur Aufnahme und/oder Übertragung der Löse-Verstellkraft angebracht ist.

10. Warenlager nach Anspruch 9, **dadurch gekennzeichnet, dass** eine der Anschlagrolle (16) zugeordnete Seite oder Fläche der Abholeinheit (17) beziehungsweise Vereinzelungseinrichtung (8) rundlich gestaltet ist.

11. Warenlager nach Ansprüche 3 und 9 oder 3 und 10, **dadurch gekennzeichnet, dass** die Anschlagrolle (16) am ersten Hebelarm (13) derart drehgelagert ist, dass in dessen nicht ausgelenkter Grundstellung die Anschlagrolle (16) an der anstoßenden und/oder heranbewegten Abholeinheit (17) unter Auslenkung des Hebelarms (13) abrollen kann.

12. Warenlager nach Anspruch 9, 10 oder 11, **dadurch gekennzeichnet, dass** die Drehachse der Anschlagrolle (16) und eine zur Drehachse parallele Symmetrie- oder Grundebene der Abholeinheit (17) vertikal gegeneinander versetzt (21) angeordnet sind.

13. Warenlager nach einem der vorangehenden Ansprüche, **dadurch gekennzeichnet, dass** die Abholeinheit (17) mit Fördermitteln zur Übernahme der Behältnisse (1) vom Schwerkraftförderer (2) realisiert ist.

14. Warenlager nach Anspruch 13 und einem der Ansprüche 9 bis 11, **dadurch gekennzeichnet, dass** die Fördermittel an einem dem Schwerkraftförderer (2) oder dessen Anschlagrolle (16) nächstliegendem Ende wenigstens eine Transport- oder Förderband-Führungstrommel (19a) umfassen, deren Drehachse zu der der Anschlagrolle (16) vertikal versetzt (21) und/oder parallel verläuft.
